# EUROPÄISCHE PATENTSCHRIFT

(11) **EP 0 960 467 B1**
(45) Veröffentlichungstag und Bekanntmachung des Hinweises auf die Patenterteilung: **13.08.2003**
(21) Anmeldenummer: 98908067.6
(22) Anmeldetag: 06.02.1998
(51) Int. Cl.: H02K 49/06

(54) **HYSTERESEBREMSE**
HYSTERESIS BRAKE
FREIN A HYSTERESIS

(30) Priorität: 12.02.1997 DE 19705290
(43) Veröffentlichungstag der Anmeldung: 01.12.1999
(73) Patentinhaber: ZF FRIEDRICHSHAFEN Aktiengesellschaft, 88038 Friedrichshafen (DE)
(72) Erfinder: SCHNEIDER, Rudolf, D-88074 Meckenbeuren (DE)
(86) Internationale Anmeldenummer: EP9800661
(87) Internationale Veröffentlichungsnummer: WO98036488

(56) Entgegenhaltungen:
- DE-A- 4 424 457
- FR-A- 2 553 741
- PATENT ABSTRACTS OF JAPAN vol. 013, no. 564 (E-860), 14.Dezember 1989 & JP 01 234043 A (SUMITOMO METAL IND LTD;OTHERS: 01), 19.September 1989,

## Beschreibung

Die vorliegende Erfindung betrifft eine dauermagneterregte Hysteresebremse mit einer Laufrolle, einem Hysteresering und einem mit Magnetpolen versehenen Magnetring.

Die Arbeitsweise von Hysteresekupplungen bzw. Hysteresebremsen beruht ganz allgemein auf magnetischer Kraftwirkung sich anziehender Pole im Synchronlauf bzw. auf ständiger Ummagnetisierung eines dauermagnetischen Materiales im Schlupfbetrieb, wobei die Schlupfleistung in Wärme umgesetzt wird. Hysteresebremsen eignen sich insbesondere zum Einsatz als Ablaufbremse bei der Verarbeitung von Material in einer Produktionsanlage wie z. B. Verseilen, Zwirnherstellung, Spulenwicklen etc. Die Anlage definiert dabei die Geschwindigkeit, mit welcher das Material vom Ablauf abgezogen wird, wobei die Ablaufbremse die Zugkraft definiert. Zu diesem Zweck wird das Material aus dem Vorrat in geeigneter Weise über eine Laufrolle geführt, z. B. indem es diese umschlingt, wobei die Laufrolle die Bremswirkung der Hysteresebremse auf das Material überträgt.

Die Ummagnetisierung in dem aus halbhartmagnetischen Dauermagnetwerkstoff bestehenden Hysteresering kann durch verschiedene Anordnungen der Erregermagnete verwirklicht werden. So beschreibt z. B. die DE-PS 28 21 973 eine magnetische Drehmomentkupplung, welche im wesentlichen aus der Kombination einer dauermagneterregten Hysteresekupplung mit einer dauermagneterregten Wirbelstromkupplung besteht. Diese bekannte Kupplung bzw. Bremse weist einen antreibenden Kupplungskörper auf, an dessen einer Stirnseite ein flacher Hysteresering angeordnet ist. Diesem Hysteresering gegenüberliegend sind auf entsprechendem Abstand mehrere Permanentmagnete in Ringanordnung vorgesehen, wobei sich die Süd-Nord-Ausrichtung im Verlauf des Ringes abwechselt. Die Permanantmagnete sind an der Stirnfläche einer magnetisierbaren Scheibe angeordnet. Eine Möglichkeit der Einstellbarkeit des Drehmomentes ist bei dieser bekannten Anordnung nicht gegeben.

Die JP 01234043 offenbart eine dauermagneterregte Hysteresebremse mit einem Hysteresering und einem an einem Trägerteil befestigten Magnetring, welcher über eine Verstelleinrichtung relativ zum Hysteresering axial verschiebbar ist.

Die FR-A-2 553 741 zeigt eine Hysteresebremse, die in ihrem Drehmoment nicht verstellbar ist. In der DE-A-4 424 457 ist eine elektromagnetische hysteresebremse gezeigt, deren Bremsmoment durch den Enregerstrom der Magnetspule beeinflußt wird.

Aus der DE-OS 37 32 766 ist eine dauermagneterregte Hysteresekupplung bzw.- bremse bekannt, mit einem als Glockenläufer ausgebildeten Hystereseteil und mit einem Erregerteil der aus einem inneren und einem äusseren Polring besteht, wobei die Magnetpole zu beiden Seiten des Glockenläufers berührungsfrei angeordnet sind; die Polringe bestehen aus weichmagnetischem Werkstoff, in welchem Permanentmagnetstücke angeordnet sind, die vollständig in dem weichmagnetischen Werkstoff eingebettet sind, so daß die dem Glockenläufer zugewandten magnetischen Pole abwechselnd von einem Permanentmagneten und von einem Weichmagneten gebildet sind; der äussere Polring und der innere Polring sind starr miteinander verbunden, aber magnetisch durch einen nicht magnetisierbaren Zwischenring getrennt.

Mit einer derartigen Hysteresebremse wird nicht nur ein einfacher Aufbau erzielt, sondern auch eine Einstellbarkeit des zu übertragenden Drehmomentes, indem die axiale Eintauchtiefe des Hysterese-Ringkörpers veränderbar ist.

Dies erfolgt bei dieser bekannten Hysteresebremse durch Anordnung des Hysterese-Ringkörpers auf einer Gewindespindel und Fixierung der Position des Ringes auf der Spindel über beispielsweise eine Feststellmutter. Damit wird das Drehmoment stufenlos verändert. Nachteilig bei dieser bekannten Hysteresebremse ist jedoch noch, daß zum einen zwei Ringluftspalte erforderlich sind aufgrund der auf beiden Seiten des Glockenläufers angeordneten Magnetpole sowie eine aufwendige Bearbeitung in Form von einer Nutenfräsung zur Einbettung der Permamentmagnetstücke in den Polringen; schließlich ist bei dieser bekannten Lösung nachteilig, daß das Bremsmoment von der Verstelleinrichtung übertragen wird und daher die Feststellmutter erforderlich ist, die bei jedem Verstellvorgang zeitaufwendig zunächst gelöst und dann wieder angezogen werden muß.

Aufgabe der vorliegenden Erfindung ist es, eine vereinfachte Hysteresebremse zu schaffen, mit berührungsloser Drehmomentübertragung eines drehzahlunabhängigen Drehmomentes, welches manuell in ihrem Bremsmoment in sehr kleinen Stufen zeitsparend einstellbar ist, die eine exakte Reproduzierbarkeit der Einstellung ermöglicht sowie die Gleichheit der Einstellung auch bei einer grossen Anzahl von Exemplaren gewährleistet.

Die erfindungsgemäße Hysteresebremse eignet sich insbesondere für den Einsatz bei textilen Prozessen, wie z. B. der Verarbeitung von Zwirnen, wobei das Bremsmoment manuell in einem Bereich zwischen z. B. 10 % und 100 % in sehr kleinen Stufen, z. B. 5-%-Stufen einstellbar ist.

Ausgehend von einer dauermagneterregten Hysteresebremse der eingangs näher genannten Art erfolgt die Lösung dieser Aufgabe mit den im kennzeichnenden Teil des Anspruchs 1 angegebenen Merkmalen; vorteilhafte Ausgestaltungen sind in den Unteransprüchen beschrieben.

Im Gegensatz zu den bekannten Hysteresebremsen wird durch das Vorsehen der Magnetpole an nur einer Oberfläche (Mantelfläche) eines Magnetringes, der vorzugsweise innerhalb des Hystereseringes angeordnet ist, der Vorteil erzielt, daß nur ein Ringluftspalt benötigt wird. Da die Magnetpole in einem geschlossenen Ring aus Permanentmagnetmaterial abwechselnd am Umfang eingeprägt sind, ist auch nur ein einfaches Bauteil erforderlich, wodurch die Herstellungskosten verringert werden.

Die drehfeste Verbindung der Laufrolle mit dem Hysteresering bringt einen einfachen konstruktiven Gesamtaufbau.

Die segmentweise, radiale, durchmagnetisierte Ausgestaltung des Magnetringes sowie das Zusammenfügen mit einem Weicheisenrückschlussring bringt den Vorteil einer höheren Ausnutzung des relativ teuren Magnetmaterials mit sich. Die erfindungsgemäße Ausgestaltung der Verstelleinrichtung läßt eine Verschiebung des Hystereseringes zu, ohne daß das Bremsmoment auf den Einstellring wirkt. Der Magnetring ist - auch bei einer Verstellung des Einstellrings - drehfest mit einer maschinenfesten Anschlußplatte verbunden. Im Gegensatz zu den bekannten Lösungen ist eine Feststelleinrichtung, welche für jeden Verstellvorgang gelöst werden muß, nicht erforderlich.

Die erfindungsgemäß vorgesehene Rasteinrichtung ermöglicht eine exakte Reproduzierbarkeit der Einstellwerte, während die vorgesehene Anschlußplatte zur Adaption an eine Maschine die einfachste Handhabung der Einstellvorrichtung gewährleistet. Eine Ausführung der Rasteinrichtung mit federnden Zugen mit Kugelförmigen Ansatzstücken sowie gleichmäßig verteilten Längsrillen ist als Kunststoffspritzteil kostengünstig herstellbar.

Zwei zusammenwirkende Sperrnocken auf der Anschlußplatte bzw. im Einstellring bewirken, daß sich die Verstelleinrichtung nur in einem bestimmten Drehwinkelbereich verdrehen läßt, und demzufolge Fehleinstellungen vermieden werden.

Die axiale Anordnung der Laufrolle mittels einer zentralen Axialfeder, welche die Lage der Laufrolle gegen eine zentrale Schraube definiert, ermöglicht mit Hilfe dieser Schraube eine axiale Grundeinstellung der Hysteresebremse und damit eine Feinkalibrierung beliebig vieler Exemplare, so daß die gefürchtete Exemplarstreuung auf ein Minimum reduziert ist.

Im folgenden wird die Erfindung anhand der Zeichnung näher erläutert, in der ein vorteilhaftes Ausführungsbeispiel dargestellt ist.

Es zeigen:
- Fig. 1: einen Schnitt durch eine erfindungsgemäße Hysteresebremse;
- Fig. 2: eine Stirnansicht auf diese Hysteresebremse;
- Fig. 3: eine Rückansicht auf diese Hysteresebremse und
- Fig. 4 und 5: Abwicklungen des Hystereseringes und des Magnetringes.

Da die Hysteresebremse in ihrem Aufbau grundsätzlich bekannt ist, werden im Zusammenhang mit dem Ausführungsbeispiel nur die für die Erfindung wesentlichen Teile näher erläutert.

In den Figuren, in denen gleiche Teile mit gleichen Bezugszeichen versehen sind, ist mit 9 eine Laufrolle bezeichnet, die zur Führung eines Fadens bei einer Textilverarbeitung bzw. zum Aufbringen einer Fadenspannung durch Umschlingung dieser Laufrolle dient. Die Laufrolle 9 ist über Lager 11 drehbar an einer Achse 5 angeordnet und trägt einen Hysteresering 1, der drehfest mit ihr verbunden ist. Eine Anordnung, bei der Magnetring 2 und Hysteresering 1 gegenüber der dargestellten Ausführung vertauscht sind, bei der also der Magnetring mit der Laufrolle drehfest verbunden ist und der Hysteresering auf einem Trägerteil 4 befestigt ist, ist naheliegend.

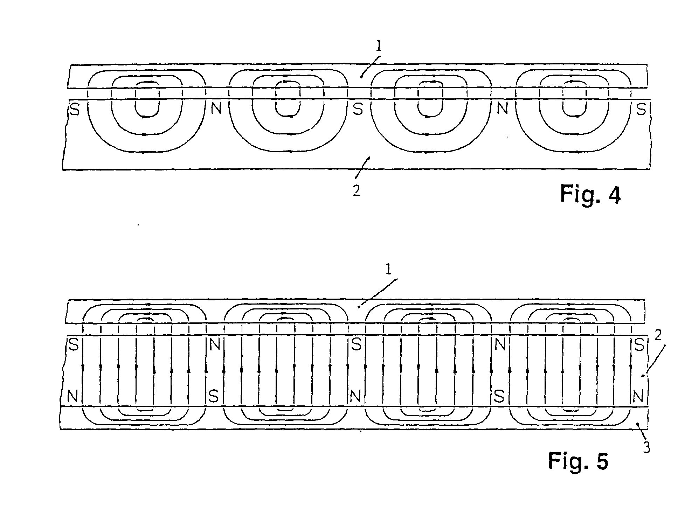

Innerhalb des Hystereseringes 1 aus einem magnetisch halbharten Werkstoff ist ein geschlossener Magnetring aus Permanentmagnetmaterial 2 angeordnet, dessen Aussenseite, d. h. dessen dem Hysteresering zugewandte Oberfläche (Mantelfläche), mit einer Vielzahl am Umfang abwechselnd eingeprägter Magnetpole versehen ist, wie es in Fig. 4 angedeutet ist. Der Magnetring 2 ist segmentweise radial durchmagnetisiert und mit einem Weicheisenrückschlussring 3 verbunden (Fig. 5).

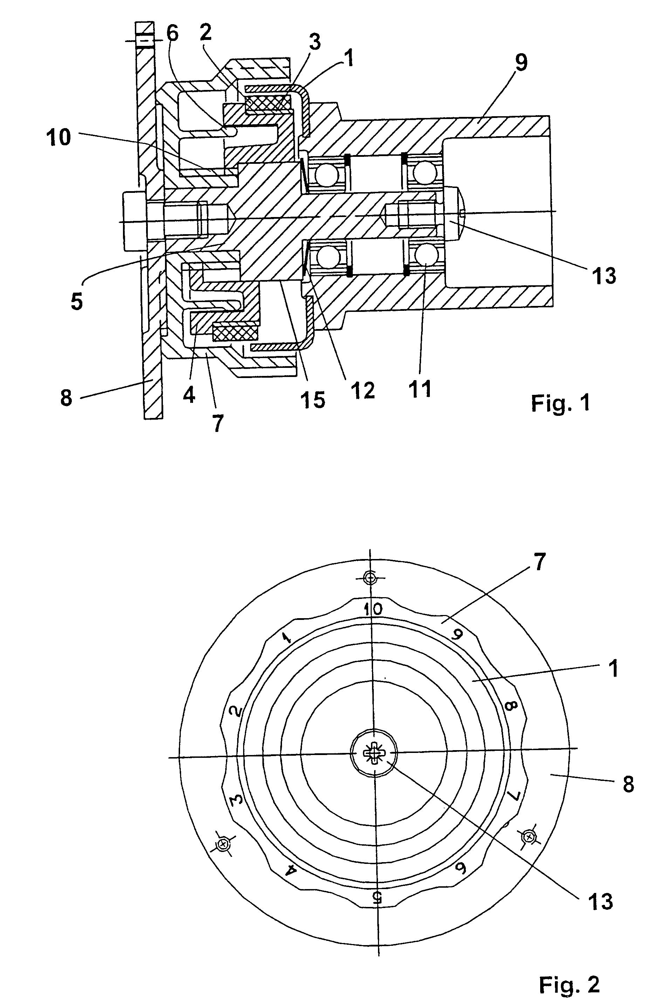

Erfindungsgemäß ist der Magnetring 2 auf dem Trägerteil 4 aufgebaut, welches durch ein Sechskantprofil 15 verdrehgesichert, aber axial verschiebbar auf der Achse 5 angeordnet ist, wobei das Trägerteil 4 mit einem Gewindeansatz in eine Gewindespindel 10 eines Einstellringes 7 eingreift, der axial festgesetzt jedoch drehbar ist. Diese Verstelleinrichtung wirkt also nicht auf den Hysteresering 1, sondern ausschliesslich auf das Trägerteil 4, welches den Magnetring 2 trägt. In Fig. 1 ist oberhalb der Mittellinie eine Endposition des Trägerteils dargestellt die dem maximalen Bremsmoment entspricht, und unterhalb der Mittellinie eine Position, bei der nur ein kleineres Bremsmoment übertragbar ist.

Der Magnetträger 4 und der Einstellring 7 besitzen jeweils ein Teil einer Rasteinrichtung, die einerseits durch federnde Zungen 6 mit kugelförmigem Ansatz gebildet werden, welche mit dem Einstellring 7 verbunden sind und andererseits durch gleichmässig verteilte Längsrillen gebildet sind, die im Trägerteil 4 ausgebildet sind. Durch diese einfache Ausgestaltung der Rasteinrichtung erhält man eine exakte Reproduzierbarkeit der Einstellwerte.

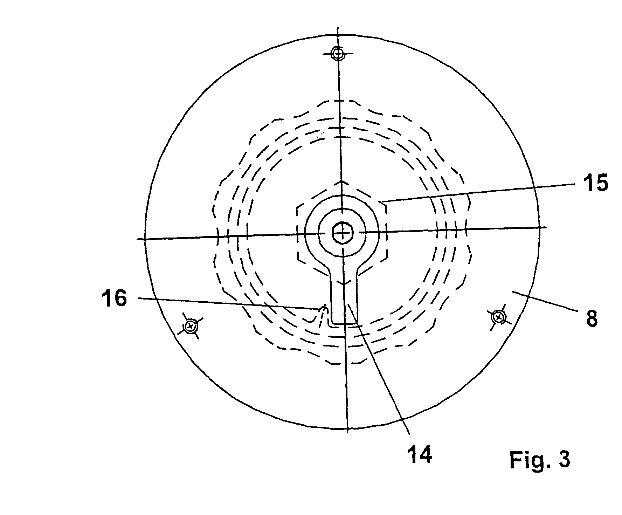

Die Hysteresebremse ist ferner mit einer Anschlußplatte 8 zur Adaption an eine Maschine versehen, wobei diese Anschlußplatte 8 z. B. einen Sperrnocken 14 aufweist, welcher mit daran angepassten Sperrnocken 16 im Einstellring zusammenwirkt, so daß Fehleinstellungen außerhalb des vorgesehenen Drehmomentbereichs vermieden werden (Fig. 3).

Die axiale Lage der Laufrolle 9 ist vorteilhafterweise durch eine zentrale Axialfeder 12 gegen eine zentrale Schraube 13 definiert. Mit Hilfe dieser Schraube ist die axiale Grundeinstellung der Hysteresebremse, d. h. eine Feinkalibrierung beliebig vieler Exemplare möglich.

Erfindungsgemäß wird also nur ein Ringluftspalt benötigt, mit einem einzigen Magnetring aus Permanentmagnetmaterial, wobei die vorgesehene Verstelleinrichtung das Trägerteil verschiebt und nicht den Hysteresering. Die Hysteresebremse ist einfach handhabbar, fein kalibrierbar und überträgt bei Verstellung kein Bremsmoment auf den Einstellring, so daß eine Feststelleinrichtung für den Einstellring nicht erforderlich ist.

### Bezugszeichen

- 1: Hysteresering
- 2: Magnetring
- 3: Weicheisenrückschlussring
- 4: Trägerteil
- 5: Achse
- 6: Zunge
- 7: Einstellring
- 8: Anschlußplatte
- 9: Laufrolle
- 10: Gewindespindel
- 11: Lager
- 12: Axialfeder
- 13: Schraube
- 14: Sperrnocken
- 15: Sechskantprofil
- 16: Sperrnocken

## Patentansprüche

1. Dauermagneterregte Hysteresebremse mit einer Laufrolle (9), einem Hysteresering (1) und einem mit Magnetpolen versehenen konzentrisch zu dem Hysteresering (1) angeordneten Magnetring (2), **dadurch gekennzeichnet, daß** der Magnetring (2) aus Permanentmagnetmaterial segmentweise abwechselnd radial durchmagnetisiert ist, der Hysteresering (1) durch einen einzigen Ringluftspalt vom Magnetring (2) getrennt ist, und der Magnetring (2) an einem Trägerteil (4) befestigt ist, das relativ zum Hysteresering (1) über eine Verstelleinrichtung (4, 10, 7) axial verschiebbar gelagert ist.

2. Hysteresebremse nach Anspruch 1, **dadurch gekennzeichnet, daß** der Hysteresering (1) radial außerhalb des Magnetrings (2) angeordnet ist und der Magnetring (2) das Trägerteil (4) konzentrisch umgibt.

3. Hysteresebremse nach einem der Ansprüche 1 bis 2, **dadurch gekennzeichnet, daß** der Magnetring (2) mit einem Rückschlußring aus Weicheisen (3) verbunden ist.

4. Hysteresebremse nach einem der Ansprüche 1 bis 3, **dadurch gekennzeichnet, daß** die Verstelleinrichtung aus einem Gewindeansatz im Trägerteil (4) und aus einer Gewindespindel (10) in einem Einstellring (7) besteht, der axial feststeht, aber drehbar ist.

5. Hysteresebremse nach einem der Ansprüche 1 bis 4, **dadurch gekennzeichnet, daß** der Magnetring (2) - auch bei einer Verstellung des Einstellrings (7) - drehfest mit der Anschlußplatte (8)verbunden ist.

6. Hysteresebremse nach einem der vorhergehenden Ansprüche, **dadurch gekennzeichnet, daß** zwischen dem Trägerteil (4) für den Magnetring (2) und der Verstelleinrichtung (4, 10, 7) eine Rastanordnung (6) vorgesehen ist.

7. Hysteresebremse nach Anspruch 6, **dadurch gekennzeichnet, daß** die Rastanordnung federnde Zungen (6) mit kugelförmigen Ansatzstücken sowie gleichmässig verteilte Längsrillen aufweist.

8. Hysteresebremse nach einem der vorhergehenden Ansprüche, **dadurch gekennzeichnet, daß** sie mit einer Maschinenanschlußplatte (8) versehen ist, die einen Sperrnocken (14) aufweist, der mit angepaßten Sperrnocken (16) im Einstellring (7) zusammenwirkt.

9. Hysteresebremse nach einem der vorhergehenden Ansprüche, **dadurch gekennzeichnet, daß** sich die Laufrolle (9) über eine Axialfeder (12) auf dem Trägerteil (4) abstützt gegen die Wirkung einer Schraube (13).

## Claims

1. Permanent-magnet-excited hysteresis brake with a roller (9), a hysteresis ring (1) and a magnetic ring (2), which is provided with magnetic poles and is disposed concentrically with the hysteresis ring (1), **characterised in that** the magnetic ring (2), consisting of permanent-magnetic material, is radially through-magnetized in segments alternately, the hysteresis ring (1) is separated from the magnetic ring (2) by a single annular air gap, and the magnetic ring (2) is fastened to a carrier part (4), which is mounted such that it can be axially displaced relative to the hysteresis ring (1) via an adjustment device (4, 10, 7).

2. Hysteresis brake according to Claim 1, **characterised in that** the hysteresis ring (1) is disposed radially outside of the magnetic ring (2), and the magnetic ring (2) concentrically surrounds the carrier part (4).

3. Hysteresis brake according to either of Claims 1 and 2, **characterised in that** the magnetic ring (2) is connected to a return ring of soft iron (3).

4. Hysteresis brake according to any one of Claims 1 to 3, **characterised in that** the adjustment device consists of a threaded lug in the carrier part (4) and of a threaded spindle (10) in a setting ring (7), which is axially stationary, yet rotatable.

5. Hysteresis brake according to any one of Claims 1 to 4, **characterised in that** the magnetic ring (2) is non-rotatably connected to the connection plate (8) - even when the setting ring (7) is adjusted.

6. Hysteresis brake according to any one of the preceding Claims, **characterised in that** a locking arrangement (6) is provided between the carrier part (4) for the magnetic ring (2) and the adjustment device (4, 10, 7).

7. Hysteresis brake according to Claim 6, **characterised in that** the locking arrangement comprises resilient tongues (6) with spherical lug pieces as well as uniformly distributed longitudinal grooves.

8. Hysteresis brake according to any one of the preceding Claims, **characterised in that** it is provided with a machine connection plate (8) comprising stop protuberances (14) which co-operate with adapted stop protuberances (16) in the setting ring (7).

9. Hysteresis brake according to any one of the preceding Claims, **characterised in that** the roller (9) is supported via an axial spring (12) on the carrier part (4) against the action of a screw (13).

## Revendications

1. Frein à hystérésis excité par aimant permanent, comprenant un galet (9), une bague à hystérésis (1) et une bague magnétique (2) pourvue de pôles magnétiques et disposée concentriquement à la bague à hystérésis (1), **caractérisé en ce que** la bague magnétique (2) en matière à aimantation permanente est magnétisée radialement alternativement par segments, la bague à hystérésis (1) est séparée de la bague magnétique (2) par un unique entrefer annulaire et la bague magnétique (2) est fixée à un élément de support (4) qui est monté pour pouvoir être déplacé axialement par rapport à la bague à hystérésis (1) au moyen d'un dispositif de manoeuvre (4, 10, 7).

2. Frein à hystérésis selon la revendication 1, **caractérisé en ce que** la bague à hystérésis (1) est disposée radialement à l'extérieur de la bague magnétique (2) et la bague magnétique (2) entoure concentriquement l'élément de support (4).

3. Frein à hystérésis selon l'une des revendications 1 à 2, **caractérisé en ce que** la bague magnétique (2) est reliée à une bague de retour en fer doux (3).

4. Frein à hystérésis selon l'une des revendications 1 à 3, **caractérisé en ce que** le dispositif de manoeuvre est composé d'une saillie filetée prévue dans l'élément de support (4) et d'une vis (10) prévue dans une bague de réglage (7) qui est fixe dans la direction axiale mais rotative.

5. Frein à hystérésis selon l'une des revendications 1 à 4, **caractérisé en ce que** la bague magnétique (2) est reliée solidairement en rotation à la plaque d'assemblage (8), même lors d'une manoeuvre de la bague de réglage (7).

6. Frein à hystérésis selon l'une des revendications précédentes, **caractérisé en ce qu'**un dispositif d'enclenchement (6) est prévu entre l'élément de support (4) pour la bague magnétique (2) et le dispositif de manoeuvre (4, 10, 7).

7. Frein à hystérésis selon la revendication 6, **caractérisé en ce que** le dispositif d'enclenchement comporte des languettes élastiques (6) pourvues de pièces rapportées sphériques, ainsi que des rainures longitudinales uniformément réparties.

8. Frein à hystérésis selon l'une des revendications précédentes, **caractérisé en ce qu'**il est pourvu d'une plaque d'assemblage (8) à la machine, qui comporte un ergot de verrouillage (14) qui coopère avec des ergots de verrouillage adaptés (16) prévus dans la bague de réglage (7).

9. Frein à hystérésis selon l'une des revendications précédentes, **caractérisé en ce que** le galet de roulement (9) s'appuie sur l'élément de support (4) par l'intermédiaire d'un ressort axial (12), en antagonisme par rapport à l'action d'une vis (13).
